# EUROPÄISCHE PATENTSCHRIFT

(11) **EP 3 592 142 B1**
(45) Veröffentlichungstag und Bekanntmachung des Hinweises auf die Patenterteilung: **28.08.2024**
(21) Anmeldenummer: 18710412.0
(22) Anmeldetag: 07.03.2018
(51) Int. Cl.: A01M 7/00

(54) **REGELSYSTEM, LANDWIRTSCHAFTLICHES NUTZFAHRZEUG UND VERFAHREN ZUR REGELUNG EINES LANDWIRTSCHAFTLICHEN NUTZFAHRZEUGES**
CLOSED-LOOP CONTROL SYSTEM, AGRICULTURAL UTILITY VEHICLE, AND METHOD FOR CONTROLLING AN AGRICULTURAL UTILITY VEHICLE
DISPOSITIF DE RÉGULATION, VÉHICULE UTILITAIRE AGRICOLE ET PROCÉDÉ DE RÉGULATION D'UN VÉHICULE UTILITAIRE AGRICOLE

(30) Priorität: 08.03.2017 DE 102017104844
(43) Veröffentlichungstag der Anmeldung: 15.01.2020
(73) Patentinhaber: Amazonen-Werke H. Dreyer SE & Co. KG, 49205 Hasbergen (DE); HYDAC Systems & Services GmbH, 66280 Sulzbach (DE)
(72) Erfinder: KIEFER, Timo, 66740 Saarlouis (DE); KOMMA, Georg, 66386 Sankt Ingbert (DE); GROSSE PRUES, Frank, 49593 Bersenbrück (DE)
(74) Vertreter: Grünecker Patent- und Rechtsanwälte PartG mbB
(86) Internationale Anmeldenummer: PCT/EP2018/055580
(87) Internationale Veröffentlichungsnummer: WO 2018/162539

(56) Entgegenhaltungen:
- EP-A1- 1 444 894
- WO-A1-2008/098290
- US-A1- 2013 299 601

## Beschreibung

Die Erfindung betrifft ein Regelsystem für ein landwirtschaftliches Nutzfahrzeug gemäß dem Oberbegriff des Patentanspruchs 1. Ferner betrifft die Erfindung ein landwirtschaftliches Nutzfahrzeug gemäß Anspruch 13, sowie ein Verfahren zur Regelung eines landwirtschaftlichen Nutzfahrzeuges gemäß Anspruch 14.

Derartige Systeme werden für landwirtschaftliche Nutzfahrzeuge zum Ausbringen von Material, wie Düngemittel, Pflanzenschutzmittel oder Saatgut verwendet. Um das Material großflächig und effizient auf den zu bearbeitenden Feldboden auszubringen, weisen derartige Nutzfahrzeuge ein Verteilergestänge mit mehreren Sprühdüsen auf. Das Verteilergestänge erstreckt sich quer zur Fahrtrichtung und kann Arbeitsbreiten von bis zum 40 Metern aufweisen. Die Sprühdüsen, welche in regelmäßigem Abstand am Verteilergestänge angebracht sind, dienen der Ausbringung des Materials auf den zu bearbeitenden Boden. Dabei soll der Abstand zwischen dem Verteilergestänge und dem Boden über die gesamte Arbeitsbreite möglichst konstant bleiben. Mit anderen Worten soll das Verteilergestänge möglichst parallel zum zu bearbeitenden Boden gehalten werden.

Das Verteilergestänge weist bekanntermaßen ein Mittelteil auf, welches beispielhaft durch einen mittig gelegenen Rahmen gebildet sein kann. Mit dem Mittelteil sind zwei seitliche Ausleger mit mehreren zueinander in Transportstellung einklappbaren und in Arbeitsstellung ausklappbaren, durch Gelenke verbundenen Gestängeabschnitten, verbunden. Dabei können die einzelnen Gestängeabschnitte über die zugehörigen Gelenke um vertikale Achsen verschwenkt werden und sind daher drehbar um die jeweilige vertikale Achse gelagert. Das Verteilergestänge kann somit von einer platzsparenden Transportstellung im eingeklappten Zustand in eine Arbeitsstellung mit voller Arbeitsbreite überführt werden.

Ein derartiges Verteilergestänge ist beispielhaft aus der EP 21 86 405 A1 bekannt. Dabei sind die einzelnen Gestängeabschnitte um eine horizontale Achse schwenkbar angeordnet und zusätzlich zum Schwenkvorgang der einzelnen Gestängeabschnitte ist das Mittelteil entlang einer vertikalen Achse bewegbar angeordnet. Dadurch kann eine Höhenverstellbarkeit der

Ausleger erreicht werden. Ein weiteres Beispiel ist aus der WO 2008/098290 bekannt.

Zur Steuerung der Verschwenkung sind an den einzelnen Gestängeabschnitten mehrere Sensoren angebracht, welche in indirektem Kontakt mit der Bodenoberfläche stehen. Die Sensoren, welche beispielhaft als optische Sensoren ausgebildet sein können, erfassen einen Istwert, welcher durch den relativen Abstand zur Bodenoberfläche gebildet ist. Weiterhin können Sensoren, wie beispielsweise Winkellagegeber, an den einzelnen Gestängeabschnitten angeordnet sein, um eine Relativposition zwischen den einzelnen Gestängeabschnitten zu erfassen. Die aktuell erfassten Istwerte bezüglich eines Abstandes des jeweiligen Gestängeabschnitts zur Bodenoberfläche und der Relativposition der einzelnen Gestängeabschnitte werden an eine Datenverarbeitungseinheit weitergegeben. Die Datenverarbeitungseinheit kann die erfassten Istwerte mit bereits hinterlegten oder durch den Benutzer vorgegebenen Sollwerten vergleichen. Daraufhin können Stellsignale für hydraulische Einrichtungen, welche den einzelnen Gestängeabschnitten zugeordnet sind, ausgegeben werden. Mittels der einzelnen hydraulischen Einrichtungen kann eine Veränderung der Stellpositionen der einzelnen Gestängeabschnitte oder der Ausleger erfolgen. Dabei erfolgt die Veränderung der Stellpositionen eines einzelnen Gestängeabschnittes nicht absolut auf dem Wert des zugehörigen Sensors des Gestängeabschnitts, sondern immer in Relation zu der Stellung der anderen Gestängeabschnitte und ihrer zugehörigen Sensoren.

Da bekanntermaßen das Verteilergestänge auch federnd mit dem Nutzfahrzeug verbunden sein kann, kann ein Überfahren des Nutzfahrzeuges von Unebenheiten im Boden dazu führen, das sich die Höhe des gesamten Verteilergestänges relativ zur Bodenfläche verändert. Dabei werden auch die äußeren Enden der Ausleger mit angehoben oder abgesenkt, da diese direkt mit dem Mitteilteil verbunden sind. Bei einer festen Sollwertvorgabe, sowohl für die einzelnen Gestängeabschnitte, als auch für das gesamte Verteilergestänge, wird mittels der Datenverarbeitungseinheit das An- und Abwinkeln der Ausleger, sowie eine Höhenverstellung des Verteilergestänges einzeln gesteuert. Es kann hierbei passieren, dass sowohl das Mittelteil, als auch ein oder mehrere Gestängeabschnitte nicht den erforderlichen Sollabstand aufweisen und somit das Mittelteil und der oder die Gestängeabschnitte gleichzeitig in der Höhe bzw. Neigung geregelt werden, um den gewünschten Sollwert einzustellen. Insbesondere ist hierbei eine kontraproduktive Regelung der verschiedenen Elemente zu beobachten, beispielsweise kann es bei einem abrupten Absinken des gesamten Verteilergestänges bei sprungartigen und schnellen Veränderungen des Abstandes zum Boden dazu kommen, dass zunächst sowohl das Mittelteil, als auch die Ausleger derart angesteuert werden, dass der Abstand zum Boden jeweils vergrößert wird. Da jedoch die seitlichen Gestängeabschnitte am Mittelteil befestigt sind, müssen diese nachdem das Mittelteil den Sollabstand erreicht hat, in der Regel wieder abgesenkt werden. Dies kann auch beispielsweise beim Wechsel zwischen dem zu bearbeitenden Feldboden und dem Vorgewende passieren, wenn für das Wendemanöver im Vorgewende ein anderer Sollabstand eingestellt wird, als bei der Arbeitsfahrt im Feld.

Der Erfindung liegt daher die Aufgabe zu Grunde, ein Regelsystem für ein landwirtschaftliches Nutzfahrzeug anzugeben, bei dem möglichst schnell und präzise eine Anpassung an unterschiedliche Bodenkonturen erfolgen kann. Der Erfindung liegt ferner die Aufgabe zu Grunde, ein landwirtschaftliches Nutzfahrzeug sowie ein Verfahren zur Regelung eines landwirtschaftlichen Nutzfahrzeuges anzugeben.

Diese Aufgabe wird erfindungsgemäß durch ein Regelsystem mit den Merkmalen des Anspruchs 1 gelöst. Im Hinblick auf das landwirtschaftliche Nutzfahrzeug wird die Aufgabe durch den Gegenstand des Anspruchs 13 gelöst. Ferner wird die Aufgabe im Hinblick auf das Verfahren durch den Gegenstand des Anspruchs 14 gelöst.

Die Erfindung beruht auf dem Gedanken ein Regelsystem für ein landwirtschaftliches Nutzfahrzeug mit einem Verteilergestänge zum Ausbringen von Material, wie Düngemittel, Pflanzenschutzmittel oder Saatgut anzugeben, welches sich quer zur Fahrtrichtung erstreckt und ein Mittelteil und zwei mit dem Mittelteil durch Gelenke verbundene seitliche Ausleger mit mehreren zueinander in Transportstellung einklappbaren und in Arbeitsstellung ausklappbaren, durch Gelenke verbundene Gestängeabschnitte aufweist. Das Mittelteil ist zur Höhenverstellbarkeit des Verteilergestänges entlang einer vertikalen Achse bewegbar angeordnet. Jedem Ausleger ist wenigstens eine hydraulische Einrichtung zugeordnet, wodurch der jeweilige Ausleger um eine horizontale Achse schwenkbar ist. Dem Verteilergestänge sind weiterhin wenigstens drei Sensoren zur Ermittlung des Abstandes des Mittelteils und des jeweiligen Auslegers zum Boden zugeordnet, und das System weist eine Datenverarbeitungseinheit auf, welche derart konfiguriert ist, dass die Signale der Sensoren als Istwerte verarbeitet werden und auf deren Basis zur Anpassung an einen Sollabstand ein Stellsignal für die hydraulische Einrichtung generiert wird. Dabei ist der Sollabstand zur Verschwenkung der Ausleger durch den aktuellen Istwert des Mittelteils gebildet.

Die Erfindung hat den Vorteil, dass insbesondere bei einer plötzlichen Veränderung der Höhe des Verteilergestänges oder einem sprunghaften An- und Abwinkeln der Ausleger, beispielsweise aufgrund des Überfahrens von Unebenheiten im zu bearbeitenden Feldboden, die Trägheitseffekte des Verteilergestänges effizienter kompensiert werden können als bei einer festen Sollwertvorgabe für jeden einzelnen Gestängeabschnitt, beziehungsweise Ausleger. Durch die Anpassung des Sollabstands zur Verschwenkung der Ausleger an den aktuellen Istwert des Mittelteils ist es möglich, dass die beiden Ausleger nahezu gleichzeitig mit dem Mittelteil den Sollabstand zum Boden erreichen können. Folglich kann auf ein zusätzlich benötigtes An- und Abwinkeln der Ausleger nach einem Erreichen des Sollabstandes des Mittelteils verzichtet werden.

Insbesondere bei einer sprunghaften Änderung des Istwertes im Vergleich zum Sollwert des Mittelteils, ergibt sich der Vorteil, dass die Neigung der Ausleger konstant gehalten werden kann, da die Sollwertvorgaben der seitlichen Ausleger nicht absolut sondern nur relativ zum Istwert des Mittelteils betrachtet werden. Anders ausgedrückt wird bei einer sprunghaften Änderung der Höhe des gesamten Verteilergestänges der Abstand des Mittelteils wieder auf den korrekten Istwert eingestellt. Da die Sollwerte der Ausleger nur relativ zum Istwert des Mittelteils betrachtet werden, wird durch eine entsprechende Höhenänderung des Mittelteils, welche ja wegen der Verbindung zwischen Auslegern und Mittelteil auch eine Höhenänderung der Ausleger bewirkt der Istwert des gesamten Verteilgergestänges wieder auf den Sollwert eingestellt. Im Vergleich zum Stand der Technik ergibt sich hieraus der Vorteil, dass es nicht erforderlich ist, zunächst das Mittelteil und die beiden Ausleger separat auf den gewünschten Sollabstand zu regeln, so dass das Mittelteil und die beiden Ausleger also beispielsweise angehoben bzw. angewinkelt würden und wenn die korrekte Höhe des Mittelteils erreicht ist, die Ausleger dann gegenläufig wieder abgewinkelt bzw. die Enden abgesenkt werden.Das bedeutet, dass generell eine geringere Neigungsverstellung der Ausleger benötigt wird. Demnach können die Kräfte, welche auf die Ausleger und damit auch auf das Verteilergestänge wirken, signifikant reduziert werden. Somit kann das Verteilergestänge möglichst schnell in einer parallelen Lage zum zu bearbeitenden Feldboden gehalten werden, und das Verteilergestänge kann sich möglichst effizient an unterschiedliche Bodenkonturen anpassen. Weiter vorzugsweise sind die von den Sensoren der Ausleger ermittelten Istwerte von der Datenverarbeitungseinheit über eine Mittelwertbildung an den Sollabstand des Mittelteils, insbesondere an den aktuellen Istwert des Mittelteils, anpassbar. Dies hat den Vorteil dass mehrere Sensoren am Verteilergestange und an den Auslegern angebracht sein kdnnen und ein Istwert des jeweiligen Auslegers über eine Mittelung der Sensoren erfassbar sein kann. Je mehr Sensoren an den Auslegern angebracht sind, umso genauer kann der aktuelle Istwert des Auslegers bestimmt werden. Daher kann die Regelung weiter optimiert und ein robuster Wert für die Sollwertanpassung der Ausleger und des Verteilergestanges bestimmt werden. Die Mittelwertbildung über die mehreren Sensoren ermöglicht es, Messungenauigkeiten Oder Fehlmessungen von einzelnen Sensoren effizient zu kompensieren Oder zu korrigieren.

Bevorzugte Ausführungsformen der Erfindung sind in den Unteransprüchen angegeben.

Bei einer bevorzugten Ausführungsform der Erfindung ist der Sollabstand zur Verschwenkung der Ausleger dynamisch an den aktuellen Istwert des Mittelteils von der Datenverarbeitungseinheit anpassbar. Mit anderen Worten wird je nach dem aktuellen Istwert des Mittelteils die Sollwertvorgabe für die beiden Ausleger variiert. Der Sollabstand zur Verschwenkung der Ausleger ist daher ein sich in Abhängigkeit von dem aktuellen Istwert des Mittelteils kontinuierlich veränderlicher Wert. Da sich der Sollwert für die beiden Ausleger dynamisch, und daher situationsbedingt anpassen lässt, kann eine optimierte Regelung der Verschwenkung der beiden Ausleger erzielt werden. Es müssen demnach beim An- und Abwinkeln der Ausleger im Vergleich zu einer festen Sollwertvorgabe für die Ausleger, geringere Rückstellkräfte zur Verschwenkung der Ausleger und damit zur Rückführung des Verteilergestänges in eine parallele Lage zum Feldboden aufgebracht werden.

Vorzugsweise ist der aktuelle Istwert des Mittelteils und/oder der Ausleger durch den jeweiligen von den Sensoren gemessenen Abstand zum Boden gebildet. Da das Verteilergestänge typischerweise eine zeitlich konstante Ausbringrate des Saatguts oder Pflanzenschutzmittels aufweist, ist die Veränderung der vertikalen Auslenkung der Ausleger zum Boden maßgebend für eine homogene Verteilung des Materials. Es ist daher von besonderem Vorteil, einer auftretenden Neigung der Ausleger oder Höhenverstellung des Verteilergestänges entgegenzuwirken, und daher den Abstand zum Boden an einen kontrollierten Sollwert anzupassen. Der von den Sensoren gemessene Abstand zum Boden bietet hierbei vorteilhafterweise einen direkten und robusten Wert für den Istwert zur Sollwertanpassung in der Datenverarbeitungseinheit.

In einer besonders bevorzugten Ausführungsform sind die Sensoren als Ultraschallsensoren und/oder optische Sensoren und/oder Radarsensoren ausgebildet. Die Sensoren können hierbei an der dem Boden zugewandten Seite der Ausleger und des Verteilergestänges angebracht sein. Somit erfassen die Sensoren einen direkten Wert für den aktuellen Abstand zum Boden. Insbesondere die Ausbildung der Sensoren als Ultraschallsensoren und/oder Radarsensoren hat den Vorteil, dass eine sehr robuste Messung des Abstandes zum Boden erfolgen kann. Es ist hierbei auch möglich die Sensoren derartig auszubilden, dass der Pflanzenbestand von der vom Sensor ausgesandten elektromagnetischen Strahlung durchdrungen werden kann und damit die Abstandsmessung zum Boden weiter präzisiert werden kann. Vorzugsweise sind Radarsensoren sehr stabil gegenüber äußeren Einflüssen, wie beispielsweise Schmutz und Verunreinigungen, Regen, Nebel oder Hitze. Daher können Radarsensoren auch direkt in unmittelbarer Nähe der Spritzmittelflüssigkeit, welche aus den Sprühdüsen ausgebracht wird, angebracht werden, um somit optimal den Abstand zum Boden zu ermitteln.

In einer weiteren Ausführungsform ist der aktuelle Istwert des Mittelteils über mehrere am Mittelteil angeordnete Sensoren erfassbar. Dies bedeutet, dass der Abstand zwischen dem Verteilergestänge und dem zu bearbeitenden Boden über mehrere Sensoren gemessen werden kann. Dies hat den Vorteil, dass insbesondere beim Ausfall eines einzigen Sensors weiterhin eine Regelung der Verschwenkung der Ausleger und/oder des Verteilergestänges erfolgen kann. Zusätzlich kann durch den Einsatz mehrerer Sensoren zur Messung des Abstandes zum Boden, der aktuelle Istwert des Mittelteils bei Bedarf korrigiert werden.

Vorzugsweise ist der aktuelle Istwert des Mittelteils durch eine Mittelwertbildung in der Datenverarbeitungseinheit von den mehreren Sensoren am Mittelteil erfassbar. Beispielhaft kann hierbei der aktuelle Istwert des Mittelteils über einen Mittelwert von zwei am Mittelteil angebrachten Sensoren erfasst werden. Dies hat den Vorteil, dass bei einem Ausfall eines individuellen Sensors, oder bei einer fehlerhaften Messung eines Sensors, dennoch ein möglichst präziser aktueller Istwert des Mittelteils ermittelt werden kann. Messungenauigkeiten der Sensoren können somit effizient kompensiert werden. Dadurch kann eine effiziente und schnelle Verschwenkung der Ausleger, und damit eine Anpassung des Verteilergestänges an unterschiedliche Bodenkonturen garantiert werden.

In einer weiteren Ausführungsform sind dem jeweiligen Ausleger mehrere Sensoren zugeordnet und der aktuelle Istwert des jeweiligen Auslegers ist durch den kleinsten von den Sensoren gemessenen Abstand zum Boden gebildet. Mit anderen Worten kann hierbei zum An- oder Abwinkeln der Ausleger des Verteilergestänges der geringste gemessene Wert des Abstandes zum Boden der mehreren Sensoren verwendet werden. Wenn beispielhaft mehrere Sensoren einen unterschiedlichen Istwert eines Auslegers ermitteln, so hat die Verwendung des jeweils kleinsten, von den Sensoren gemessenen Wertes den Vorteil, dass kontinuierlich ein minimaler Abstand zum Boden ausgeglichen werden kann und daher das Verteilergestänge bzw. die Ausleger möglichst nicht in Kontakt mit dem Boden gelangen.

Weiter vorzugsweise ist basierend auf den Messsignalen der Sensoren die Höhenverstellung des Verteilergestänges und/oder die Verschwenkung der Ausleger von der Datenverarbeitungseinheit über die hydraulische Einrichtung einstellbar. Dabei können die Messsignale der Sensoren als direkt bestimmte Istwerte von der Datenverarbeitungseinheit verwendet werden, oder durch eine Mittelwertbildung ausgewertet werden. Demnach weist die Datenverarbeitungseinheit ein Steuer- und/oder Auswerteprogramm auf, so dass die Messsignale der Sensoren verarbeitet werden können. Die Datenverarbeitungseinheit kann hierbei aus bekannten computergestützten Systemen gebildet sein, welche einen Soll-Istwert-Vergleich durchführen können und damit auf dessen Grundlage ein Stellsignal für die hydraulischen Einrichtungen generieren können. Demnach kann eine präzise und möglichst schnelle Höhenverstellung und/oder Verschwenkung der Ausleger erfolgen.

In einer besonders bevorzugten Ausführungsform umfasst die hydraulische Einrichtung einen Hydraulikzylinder, insbesondere einen doppeltwirkenden Hydraulikzylinder, eine Hydraulikleitung, welche zur Zufuhr von Hydraulikflüssigkeit an den Hydraulikzylinder angeschlossen ist, und wenigstens eine hydraulische Ventileinheit zur Anpassung einer Zylinderposition, wobei die Ventileinheit über ein Stellsignal der Datenverarbeitungseinheit einstellbar ist. Der Einsatz einer Hydraulikflüssigkeit hat bekanntermaßen den Vorteil, dass die Reibung innerhalb der hydraulischen Einrichtung verringert werden kann und gleichzeitig Korrosionsschutz gewährleistet ist. Die hydraulische Einrichtung kann hierbei allgemein als Aktor ausgebildet sein, um die Stellsignale der Datenverarbeitungseinheit in eine mechanische Bewegung umzuwandeln. Dabei kann vorzugsweise die Position des Kolbens des Hydraulikzylinders geregelt werden. Beispielsweise beim Anwinkeln der Ausleger kann durch eine von der hydraulischen Ventileinheit gesteuerte Zufuhr von Hydraulikflüssigkeit in den Hydraulikzylinder ein größerer Druck hergestellt werden, wodurch sich die Zylinderposition des Hydraulikzylinders verschiebt. Die hydraulische Ventileinheit sorgt vorteilhafterweise für einen sicheren und schnellwirkenden Überlastungsschutz des Hydraulikzylinders. Insgesamt kann damit die Zylinderposition, oder auch der Hydraulikdruck am Hydraulikzylinder mittels der hydraulischen Ventileinheit, welche von der Datenverarbeitungseinheit über das Stellsignal angesteuert werden kann, optimal eingestellt werden.

In einer weiteren besonders bevorzugten Ausführungsform ist die wenigstens eine hydraulische Ventileinheit durch ein Proportionalventil gebildet. Beispielhaft kann das Proportionalventil als ein Vierwegeventil ausgebildet sein. Es ist ebenso denkbar die hydraulische Ventileinheit durch ein Druckregelventil oder weitere Verschaltungen zur Veränderung des anliegenden Hydraulikdrucks oder zur Veränderung der Zylinderposition des Hydraulikzylinders auszubilden. Dabei kann die hydraulische Ventileinheit anhand einer bekannten Kennlinie eingestellt werden. Die Kennlinie der Ventileinheit stellt die funktionale Abhängigkeit des Ausgangssignals vom Eingangssignal dar. Die ideale Kennlinie wäre durch eine Gerade gebildet, wobei sich das Ausgangssignal demnach linear mit dem auftretenden Druck als Eingangssignal ändert. Durch die Einstellung der hydraulischen Ventileinheit anhand deren Kennlinie, kann demnach der Hydraulikzylinder effizient und möglichst schnell verstellt werden, um eine Verschwenkung der Ausleger oder eine Höhenverstellung des Verteilergestänges zu bewirken.

Bekanntermaßen kann die an dem jeweiligen Hydraulikzylinder zur Verschwenkung der Ausleger angeschlossene Hydraulikleitung mit einem Hydraulikspeicher in Verbindung stehen. Es ist hierbei denkbar, dass das Regelsystem einen zentralen Hydraulikspeicher umfasst, oder alternativ jeweils ein Hydraulikspeicher dem rechtsseitigen oder linksseitigen Ausleger des Verteilergestänges zugeordnet ist. Vorteilhafterweise wird durch den Hydraulikspeicher generell der in dem Hydraulikzylinder wirkende Druck erzeugt. Es ist von besonderem Vorteil, wenn eine gemeinsame Hydraulikleitung für den Hydraulikkreislauf vorgesehen ist. Dadurch kann ein geschlossener Hydraulikkreislauf im Regelsystem gebildet werden.

In einer besonders bevorzugten Ausführungsform bildet die Datenverarbeitungseinheit mit den Sensoren und der wenigstens einen hydraulischen Einrichtung eine Einheit. Dadurch ist eine direkte Verbindung, beispielsweise über Kabelleitungen oder kabellos, zwischen den Sensoren und der Datenverarbeitungseinheit, sowie der hydraulischen Einrichtung gegeben. Daher können die von den Sensoren ermittelten Messsignale möglichst schnell an die Datenverarbeitungseinheit weitergegeben werden und daher effizient über einen Soll- und Istwert-Vergleich von der Datenverarbeitungseinheit ein Stellsignal generiert werden, wodurch die hydraulische Einrichtung zur Verschwenkung der Ausleger oder zur Höhenverstellung des Verteilergestänges angesteuert werden kann.

Im Rahmen der vorliegenden Anmeldung wird weiterhin ein landwirtschaftliches Nutzfahrzeug zum Ausbringen von Material, wie Düngemittel, Pflanzenschutzmittel oder Saatgut mit einem Regelsystem nach einem der vorhergehenden Ausführungsformen beansprucht.

Weiterhin wird im Rahmen der vorliegenden Anmeldung ein Verfahren zur Regelung eines landwirtschaftlichen Nutzfahrzeuges offenbart, mit einem Verteilergestänge zum Ausbringen von Material, wie Düngemittel, Pflanzenschutzmittel oder Saatgut, welches sich quer zur Fahrtrichtung erstreckt und ein Mittelteil und zwei mit dem Mittelteil verbundene seitliche Ausleger mit mehreren zueinander in Transportstellung einklappbaren und in Arbeitsstellung ausklappbaren, durch Gelenke verbundene Gestängeabschnitte aufweist. Dabei ist das Mittelteil zur Höhenverstellbarkeit des Verteilergestänges entlang einer vertikalen Achse bewegbar angeordnet und jedem Ausleger ist wenigstens eine hydraulische Einrichtung zugeordnet, wodurch der jeweilige Ausleger um eine horizontale Achse schwenkbar ist. Weiterhin sind dem Verteilergestänge wenigstens drei Sensoren zur Ermittlung des Abstandes des Mittelteils und des jeweiligen Auslegers zum Boden zugeordnet und das System weist weiterhin eine Datenverarbeitungseinheit auf, welche derart konfiguriert ist, dass die Signale der Sensoren als Istwerte verarbeitet werden und auf deren Basis zur Anpassung an einen Sollabstand ein Stellsignal für die hydraulische Einrichtung generiert wird. Die Verschwenkung der Ausleger erfolgt hierbei basierend auf dem Sollabstand, welcher durch den aktuellen Istwert des Mittelteils gebildet ist.

Weiter vorzugsweise wird der Sollabstand zur Verschwenkung der Ausleger dynamisch an den aktuellen Istwert des Mittelteils von der Datenverarbeitungseinheit angepasst.

Besonders bevorzugt wird der aktuelle Istwert des Mittelteils über mehrere am Mittelteil angeordnete Sensoren erfasst.

In einer weiteren Ausführungsform wird der aktuelle Istwert des Mittelteils durch eine Mittelwertbildung in der Datenverarbeitungseinheit von den mehreren Sensoren am Mittelteil erfasst.

Vorzugsweise werden die von den Sensoren der Ausleger ermittelten Istwerte von der Datenverarbeitungseinheit über eine Mittelwertbildung an den Sollabstand des Mittelteils, welcher durch den aktuellen Istwert des Mittelteils gebildet ist, angepasst.

In einer weiteren Ausführungsform wird basierend auf den Messsignalen der Sensoren die Höhenverstellung des Verteilergestänges und/oder die Verschwenkung der Ausleger von der Datenverarbeitungseinheit über die hydraulische Einrichtung eingestellt.

Zu den Vorteilen des Verfahrens zur Regelung eines landwirtschaftlichen Nutzfahrzeuges wird auf die im Zusammenhang mit dem Regelsystem erläuterten Vorteile verwiesen.

Die Erfindung wird nachstehend mit weiteren Einzelheiten mit Bezug auf die beigefügten schematischen Zeichnungen näher erläutert. Die dargestellten Ausführungsformen stellen lediglich Beispiele dar, wie das erfindungsgemäße Regelsystem ausgestaltet sein kann und stellen keine abschließend Begrenzung dar. Darin zeigen
- Fig. 1: eine schematische Ansicht eines erfindungsgemäßen Regelsystems für die Winkellage der Ausleger mit einem Verteilergestänges nach einem ersten Ausführungsbeispiel;
- Fig. 2: eine schematische Ansicht eines erfindungsgemäßen Regelsystems für die Position des Mittelteils mit einem Verteilergestänge nach dem ersten Ausführungsbeispiel;
- Fig. 3: eine schematische Ansicht eines erfindungsgemäßen Regelsystems für die Verteilergestängeneigung mit einem Verteilergestänge nach dem ersten Ausführungsbeispiel;
- Fig. 4: eine schematische Ansicht eines erfindungsgemäßen Regelsystems mit einem Verteilergestänge nach einem weiteren Ausführungsbeispiel.

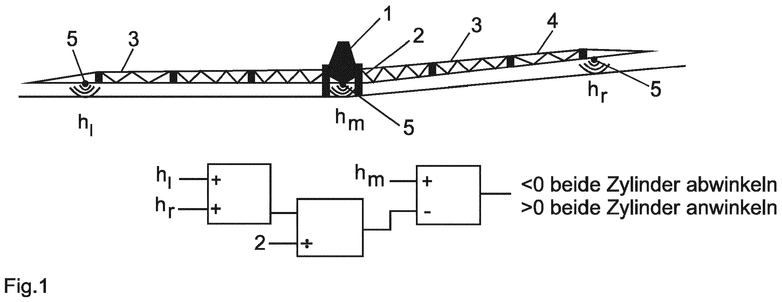

Fig. 1 zeigt eine schematische Ansicht eines Regelsystems für ein landwirtschaftliches Nutzfahrzeug 1 gemäß einem ersten Ausführungsbeispiel. Das Regelsystem umfasst ein Verteilergestänge 4 zum Ausbringen von Material, wie Düngemittel, Pflanzenschutzmittel oder Saatgut, welches sich quer zur Fahrtrichtung erstreckt. Das Verteilergestänge 4 weist ein Mittelteil 2 und zwei mit dem Mittelteil 2 durch Gelenke verbundene seitliche Ausleger 3 auf. Die seitlichen Ausleger 3 umfassen mehrere zueinander in Transportstellung einklappbare und in Arbeitsstellung ausklappbare, durch Gelenke verbundene Gestängeabschnitte. Das Mittelteil 2 ist zur Höhenverstellbarkeit des Verteilergestänges 4 entlang einer vertikalen Achse bewegbar angeordnet. Jedem der beiden seitlichen Ausleger 3 ist wenigstens eine nichtdargestellte hydraulische Einrichtung zugeordnet, wodurch der jeweilige Ausleger 3 um eine horizontale Achse schwenkbar ist. Dem Verteilergestänge 4 sind drei Sensoren 5 zugeordnet. Hierbei ist ein Sensor 5 am Mittelteil angeordnet, und die beiden anderen Sensoren 5 dem jeweiligen äußeren Ende des rechtsseitigen und linksseitigen Auslegers 3 zugeordnet. Die Sensoren 5 sind an der Unterkante des jeweiligen Auslegers 3 und des Mittelteils 2 angebracht. Die Sensoren 5 können den aktuellen Abstand des jeweiligen Auslegers und des Mittelteils zum Boden messen. Dazu sind die Sensoren 5 beispielhaft als Ultraschallsensoren oder Radarsensoren ausgebildet.

Der gemessene Abstand zum Boden wird für den linksseitigen Ausleger 3 durch die Höhe hₗ definiert, und äquivalent für den rechtzeitigen Ausleger 3 mit der Höhe hᵣ. Der gemessene Abstand zum Boden des Mittels 2 wird gleichermaßen durch die Höhe hₘ definiert.

Weiterhin weist das Regelsystem eine nichtdargestellte Datenverarbeitungseinheit auf, welche derart konfiguriert ist, dass die Signale der Sensoren 5 als Istwerte verarbeitet werden und auf deren Basis zur Anpassung an einen Sollabstand ein Stellsignal für die nichtdargestellten hydraulischen Einrichtungen generiert werden kann. Hierzu kann die Datenverarbeitungseinheit ein Steuer- und/oder Auswerteprogramm aufweisen und generell als computergestütztes System gebildet sein. Die Messsignale der Sensoren 5 können an die Datenvorrichtungseinheit über Kabelverbindungen oder kabellos übertragen werden.

Die Regelung der Verteilergestängekonfiguration, also der Höhe des Mittelteils 2, der Anstellwinkel der Ausleger 3 sowie der Neigung des gesamten Verteilergestänges erfolgt hierbei mittels dreier Regelungsvorgänge, welche in den Figuren 1 bis 3 dargestellt sind. Diese Vorgänge laufen vorzugsweise gleichzeitig ab, können jedoch auch nacheinander durchgeführt werden.

Die Datenverarbeitungseinheit ist hierbei derart konfiguriert, dass von den gemessenen Abständen zum Boden der beiden Ausleger 3, also die gemessenen Werte hₗ und hᵣ, als Istwerte in einem ersten Regelungsvorgang verarbeitet werden. Dabei wird aus den gemessenen Werten hₗ und hᵣ ein Mittelwert gebildet. Dieser Mittelwert wird mit dem aktuellen Istwert des Mittelteils 2 verglichen. Der aktuelle Istwert des Mittelteils 2 ist durch den gemessenen Abstand hₘ gebildet. Sollte der Mittelwert der beiden Ausleger 3 von dem aktuellen Istwert des Mittelteils 2 abweichen, also anders gesagt eine Regeldifferenz vorliegen, kann die Datenverarbeitungseinheit ein Stellsignal für die hydraulischen Einrichtungen zur Verschwenkung der Ausleger 3 generieren. Der Sollabstand zur Verschwenkung der Ausleger 3 ist demnach durch den aktuellen Istwert des Mittelteils 2 gebildet.

Die nicht dargestellte hydraulische Einrichtung, welche jedem Ausleger 3 zugeordnet ist, kann vorteilhafterweise einen Hydraulikzylinder, insbesondere einen doppeltwirkenden Hydraulikzylinder, eine Hydraulikleitung, welche zur Zufuhr von Hydraulikflüssigkeit an den Hydraulikzylinder angeschlossen ist, und wenigstens eine hydraulische Ventileinheit zur Anpassung einer Zylinderposition umfassen. Dabei kann die hydraulische Ventileinheit über ein Stellsignal der Datenverarbeitungseinheit einstellbar sein. Wenn eine positive Regeldifferenz zwischen dem aktuellen Istwert des Mittelteils 2 und dem Mittelwert der beiden gemessenen Abstände zum Boden der Ausleger 3 vorliegt, kann die Datenverarbeitungseinheit ein Stellsignal für die hydraulischen Einrichtungen der Ausleger 3 generieren, wodurch die beiden Hydraulikzylinder der Ausleger 3 angewinkelt werden. Im Falle einer negativen Regeldifferenz, können beide Hydraulikzylinder der beiden Ausleger 3 abgewinkelt werden. Daher wird basierend auf dem Stellsignal der Datenverarbeitungseinheit eine Verschwenkung der beiden Ausleger 3 bewirkt.

Beispielhaft kann bei Überfahren des landwirtschaftlichen Nutzfahrzeuges 1 auf ebenem Gelände der gemessene Abstand zum Boden des rechtsseitigen und linksseitigen Auslegers 3, sowie des Mittelteils 2 überall 100 cm betragen. Der Sollabstand des Verteilergestänges 4 zum Boden kann daher ebenso 100 cm betragen. Wenn das landwirtschaftliche Nutzfahrzeug 1 eine Unebenheit im Boden überfährt, kann es passieren dass sich sowohl das Mittelteil 2 absenkt, als auch die beiden Ausleger 3. Beispielhaft kann sich der gemessene Abstand zum Boden des Mittelteils 2 von einer Höhe hₘ=100 cm auf eine Höhe hₘ=80 cm absenken. In gleicher Weise kann sich die Höhe der beiden Ausleger 3 beispielhaft von hₗ=hᵣ=100 cm auf hₗ=hᵣ=80 cm absenken.

Die Datenverarbeitungseinheit kann, aufgrund der Auslenkung des Verteilergestänges 4 aus seiner Ausgangslage, für die Höhenverstellbarkeit des Verteilergestänges 4 ein Stellsignal für eine hydraulische Einrichtung generieren, wodurch das gesamte Verteilergestänge 4 wieder auf die Sollabstandsvorgabe hₘ=100 cm angehoben wird. Dabei kann das Mittelteil entlang einer vertikalen Achse zur Höhenverstellbarkeit bewegt werden.

Der Sollabstand zur Verschwenkung der Ausleger 3 ist durch den aktuellen Istwert des Mittelteils 2 gebildet. Das bedeutet, dass anfänglich der Sollabstand zur Verschwenkung der Ausleger 3 durch den Wert hₘ=80 cm der aufgetretenen Auslenkung des Mittelteils 2 gebildet ist. Die Ausleger werden im Gegensatz zum Stand der Technik nicht an-/ oder abgewinkelt, da der Sollabstand der Ausleger 3 erfindungsgemäß durch den Istabstand des Mittelteils gebildet wird und sich somit der Sollabstand der Ausleger von 100 cm auf 80 cm entsprechend des Istabstandes des Mittelteils reduziert. Aufgrund der Sollwertvorgabe des Mittelteils 2 von 100 cm, wird folglich der Sollabstand zur Verschwenkung der Ausleger 3 dynamisch an den aktuellen Istwert des Mittelteils 2 angepasst. Das bedeutet, dass die Verschwenkung der Ausleger 3 an die Höhenregelung des Mittelteils 2 angepasst ist. Mit anderen Worten erfolgt die Verschwenkung der Ausleger 3 in Abhängigkeit der Veränderung des aktuellen Istwerts des Mittelteils 2. Dies hat den Vorteil, dass zur Verschwenkung der Ausleger 3 eine geringere Kraft bzw. Zeit benötigt wird, als wenn die Verschwenkung der Ausleger einen festgelegten Sollwert von 100 cm erreichen sollte. Es wirken daher vorzugsweise geringere Kräfte auf das gesamte Verteilergestänge 4 bei einem Überfahren von Unebenheiten im Boden. Weiterhin kann effizient ein zusätzliches An/Abwinkeln der Ausleger 3 vermieden werden, welches aufgrund von Trägheitskräften des gesamten Verteilergestänges 4 resultieren kann. Es werden also nicht wie bei einem festen absoluten Sollwert für die Ausleger 3 diese zunächst angewinkelt und dann, nachdem das Mittelteil seinen Sollwert wieder erreicht hat, abgewinkelt. Demnach kann eine optimierte Regelung der Verschwenkung der beiden Ausleger 3 erzielt werden. Mit anderen Worten beeinflusst also das Hubwerk des Mittelteils zur Höhenverstellung den Wert von hₘ,hₗ, und hᵣ immer identisch. Weichen alle um denselben Wert ab, ist es daher vorteilhaft das Hubwerk zu verfahren und die Hydraulikzylinder zum An/Abwinkeln der Ausleger 3 ruhen zu lassen. Ansonsten kann es zu gegenläufigen Bewegungen der Ausleger3 und des Mittelteils 2 kommen.

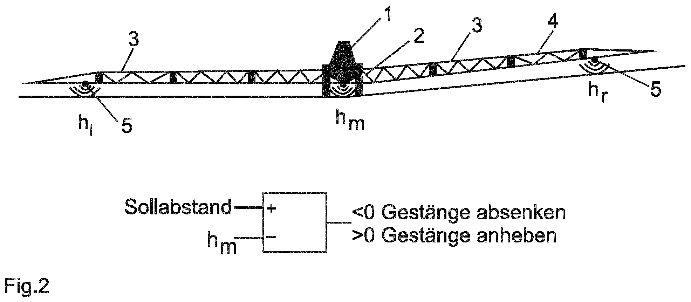

Fig. 2 zeigt eine schematische Ansicht eines Regelsystems für die Höhenregelung des Mittelteils für ein landwirtschaftliches Nutzfahrzeug 1 gemäß dem ersten Ausführungsbeispiel zur Durchführung des zweiten Regelungsvorganges. Dabei weist das Regelsystem ein Verteilergestänge 4 zum Ausbringen von Material, wie Düngemittel, Pflanzenschutzmittel oder Saatgut, auf, welches sich quer zur Fahrtrichtung erstreckt. Das Verteilergestänge 4 umfasst weiterhin ein Mittelteil 2 und zwei mit dem Mittelteil 2 durch Gelenke verbundene seitliche Ausleger 3. Das Mittelteil 2 ist zur Höhenverstellbarkeit des Verteilergestänges 4 entlang einer vertikalen Achse bewegbar angeordnet. Jedem der beiden seitlichen Ausleger 3 ist wenigstens eine nichtdargestellte hydraulische Einrichtung zugeordnet, wodurch der jeweilige Ausleger 3 um eine horizontale Achse schwenkbar ist. Dem Verteilergestänge sind drei Sensoren 5 zugeordnet, wodurch der Abstand des Mittelteils 2 und des jeweiligen Auslegers 3 zum Boden ermittelt werden kann. Hierzu sind die Sensoren 5 jeweils an der Unterkante des Mittelteils 2 und des rechtsseitigen und linksseitigen Auslegers 3 angeordnet. Die Sensoren 5 können zur Abstandsmessung als Ultraschallsensoren oder als Radarsensoren ausgebildet sein.

Wenn das landwirtschaftliche Nutzfahrzeug 1 eine Unebenheit im Boden überfahren sollte, und sich demnach das Verteilergestänge 4 anheben oder absenken sollte, so ändert sich der aktuell ermittelte Istwert des Mittelteils 2, welcher durch den aktuellen Abstand zum Boden hₘ gebildet ist. Die aktuell von den Sensoren 5 ermittelten Istwerte zum aktuellen Abstand der Ausleger 3 und des Mittelteils 2 zum Boden werden an eine nichtdargestellte Datenverarbeitungseinheit weitergeleitet, welche derart konfiguriert ist, dass die Messsignale der Sensoren 5 als Istwerte verarbeitet werden und auf deren Basis zur Anpassung an einen Sollabstand ein Stellsignal für die jeweilige hydraulische Einrichtung der Ausleger 3 generiert wird.

Die Datenverarbeitungseinheit kann bei einer Abweichung des aktuellen Istwertes des Mittelteils 2 hₘ von einem von einem Benutzer vorgegebenen Sollabstand, einen Soll-Istwert-Vergleich durchführen. Mit anderen Worten wird der Unterschied zwischen dem Sollabstand des Verteilergestänges 4 und dem aktuell gemessenen Istwert des Mittelteils 2 hₘ berechnet, und aufgrund dieser Regeldifferenz das Verteilergestänge 4 angehoben oder abgesenkt. Dies entspricht einer Höhenverstellung des gesamten Verteilergestänges 4, insbesondere auch der Ausleger 3, basierend auf dem vorgegebenen Sollabstand.

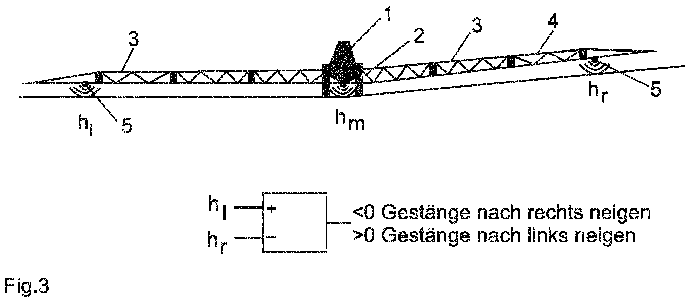

In Fig. 3 ist ein dritter Regelungsvorgang zur Einstellung der Neigung des Verteilergestänges dargestellt. Hierbei wird eine Differenzbildung der mittels der Sensoren 5 ermittelten Abstandwerte durchgeführt. Der Abstand beider Ausleger zum Boden soll möglichst identisch sein und dem Istabstand hₘ des Mittelteils entsprechen. Im Idealfall ist das Ergebnis der Differenzbildung somit 0. Das Ergebnis der Differenzbildung dient also zur Steuerung der Rotation um eine in Fahrtrichtung liegende Achse. Hierfür ist in an sich bekannter Weise ein nicht dargestellter Aktor vorgesehen, der das Gestänge als Ganzes um die Achse, je nach Vorzeichen des Ergebnisses der Differenzbildung, im Uhrzeigersinn oder entgegen des Uhrzeigersinnes dreht, bis die Messsignale hₗ und hᵣ der Sensoren 5 an den Auslegern identisch sind.

Zusammengefasst wird die Einstellung der Position des Verteilergestänges also in drei Schritten durchgeführt:
1. Das An- und Abwinkeln der Ausleger erfolgt derart, dass die Abstände der Auslegerseiten zum Boden im Mittel dem Abstand des Mittelteils zum Boden entsprechen.
2. Die Höhe des Verteilergestänges wird eingestellt, indem der Abstand des Mittelteils zum Boden gemessen und an einen Sollabstand angepasst wird.
3. Die Neigung des Verteilergestänges wird eingestellt, indem das gesamte Verteilergestänge um eine in Fahrtrichtung liegende Achse gedreht wird, bis die Abstände hₗ und hᵣ identisch sind.

Auf diese Weise können die drei Parameter Anstellwinkel der Ausleger, Höhe und Neigung des Verteilergestänges unabhängig eingestellt werden. Der Vorteil dieser Regelung gegenüber einer konventionellen Höhenregelung jedes einzelnen Abschnitts des Verteilergestänges ist, dass die verschiedenen Regelungsvorgänge, insbesondere die Regelung des Anstellwinkels und der Höhe, nicht gegeneinander arbeiten können.

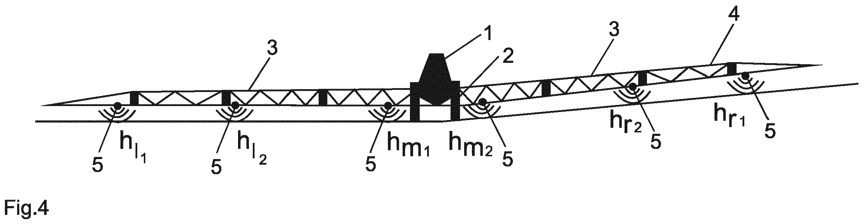

Fig. 4 zeigt eine schematische Ansicht eines erfindungsgemäßen Regelsystems gemäß einem weiteren Ausführungsbeispiel. Das Regelsystem für ein landwirtschaftliches Nutzfahrzeug 1 umfasst ein Verteilergestänge 4 zum Ausbringen von Material, wie Düngemittel, Pflanzenschutzmittel oder Saatgut, welches sich quer zur Fahrtrichtung erstreckt und ein Mittelteil 2 und zwei mit dem Mittelteil verbundene seitliche Ausleger 3 aufweist. Das Mittelteil 2 ist zur Höhenverstellbarkeit des Verteilergestänges 4 entlang einer vertikalen Achse bewegbar angeordnet und jedem Ausleger 3 ist wenigstens eine nichtdargestellte hydraulische Einrichtung zugeordnet. Hierdurch ist der jeweilige Ausleger 3 um eine horizontale Achse schwenkbar.

Dem Verteilergestänge sind sechs Sensoren 5 zugeordnet. Die Sensoren 5 können beispielhaft als Ultraschallsensoren oder Radarsensoren ausgebildet sein. Es ist ebenso denkbar, dass die Sensoren 5 als optische Sensoren ausgebildet sind. Die Sensoren 5 erfassen einen aktuellen Abstand des Verteilergestänges 4 zum Boden. Dabei sind dem Mittelteil 2 rechtsseitig und linksseitig zwei Sensoren 5 zugeordnet, und jeweils zwei Sensoren 5 dem rechtsseitigen und linksseitigen Ausleger 3 zugeordnet. Demnach kann der Abstand zwischen dem Mittelteil 2 und dem rechtsseitigen und linksseitigen Ausleger zum zu bearbeitenden Boden jeweils über mehrere Sensoren ermittelt werden. Beispielhaft kann der aktuelle Abstand zum Boden des Mittelteils 2, also der aktuelle Istwert des Mittelteils 2 über die beiden Sensoren 5 gemessen werden, welche dem Mittelteil 2 zugeordnet sind. Diese beiden Sensoren 5 erfassen jeweils rechtsseitig und linksseitig des Mittelteils 2 einen Abstand zum Boden hₘ₁ und hₘ₂.

Das Regelsystem umfasst weiterhin eine nichtdargestellte Datenverarbeitungseinheit, welche derart konfiguriert ist, dass die Signale der Sensoren 5 als Istwerte verarbeitet werden und auf deren Basis zur Anpassung an einen Sollabstand ein Stellsignal für die hydraulischen Einrichtungen der Ausleger 3 generiert werden kann. Für den aktuellen Istwert des Mittelteils kann daher von der Datenverarbeitungseinheit ein Mittelwert aus den beiden gemessenen Abständen zum Boden hₘ₁ und hₘ₂ bestimmt werden.

Gleichermaßen kann jeweils für den rechtsseitigen und linksseitigen Ausleger 3 ein Mittelwert der gemessenen Abstände zum Boden der beiden, dem jeweiligen Ausleger 3 zugeordneten Sensoren, hₗ₁ und hₗ₂, sowie hᵣ₁ und hᵣ₂ bestimmt werden. Alternativ kann für die beiden Ausleger 3 der kleinste gemessene Abstand der jeweiligen Sensoren 5 zur Messung von hₗ₁ und hₗ₂, sowie hᵣ₁ und hᵣ₂ von der Datenverarbeitungseinheit verwendet werden. Zur jeweiligen Verschwenkung der Ausleger 3 kann folglich der aktuell ermittelte Istwert der jeweiligen Ausleger 3, mit dem aktuellen Istwert des Mittelteils 2 verglichen werden, und von der Datenverarbeitungseinheit basierend darauf ein Stellsignal generiert werden.

Die Mittelwertbildung von den mehreren Sensoren 5 an dem jeweiligen Ausleger 3 und dem Mittelteil 2 hat den Vorteil, dass ein präziser Wert für den aktuellen Istwert des Auslegers 3 und des Mittelteils 2 erfasst werden kann. Ebenso kann bei Fehlmessungen eines einzigen Sensors 5, dennoch ein genauer Wert für den aktuellen Istwert erfasst werden. Somit kann die Regelung der Verschwenkung der Ausleger 3 effizient auch bei Ausfallen eines einzigen Sensors 5 erfolgen.

### Bezugszeichenliste

- 1: Landwirtschaftliches Nutzfahrzeug
- 2: Mittelteil
- 3: Ausleger
- 4: Verteilergestänge
- 5: Sensor

## Patentansprüche

1. Regelsystem für ein landwirtschaftliches Nutzfahrzeug (1) mit einem Verteilergestänge (4) zum Ausbringen von Material, wie Düngemittel, Pflanzenschutzmittel oder Saatgut, welches sich quer zur Fahrtrichtung erstreckt und ein Mittelteil (2) und zwei mit dem Mittelteil (2) durch Gelenke verbundene seitliche Ausleger (3) mit mehreren zueinander in Transportstellung einklappbaren und in Arbeitsstellung ausklappbaren, durch Gelenke verbundene Gestängeabschnitte aufweist, wobei das Mittelteil (2) zur Höhenverstellbarkeit des Verteilergestänges (4) entlang einer vertikalen Achse bewegbar angeordnet ist und jedem Ausleger (3) wenigstens eine hydraulische Einrichtung zugeordnet ist, wodurch der jeweilige Ausleger (3) um eine horizontale Achse schwenkbar ist, und wobei dem Verteilergestänge (4) wenigstens drei Sensoren (5) zur Ermittlung des Abstandes des Mittelteils (2) und des jeweiligen Auslegers (3) zum Boden zugeordnet sind und das System eine Datenverarbeitungseinheit aufweist, welche derart konfiguriert ist, dass die Signale der Sensoren (5) als Istwerte verarbeitet werden und auf deren Basis zur Anpassung an einen Sollabstand ein Stellsignal für die hydraulische Einrichtung generiert wird, **dadurch gekennzeichnet, dass**
der Sollabstand zur Verschwenkung der Ausleger (3) durch den aktuellen Istwert des Mittelteils (2) gebildet ist und die Datenverarbeitungseinheit derart konfiguriert ist, dass die gemessenen Abstände zum Boden der beiden Ausleger (3) als Istwerte in einem ersten Regelungsvorgang verarbeitet werden, wobei aus den gemessenen Werten ein Mittelwert gebildet wird, der mit dem aktuellen Istwert des Mittelteils (2) verglichen wird.

2. Regelsystem nach einem der vorhergehenden Ansprüche,
**dadurch gekennzeichnet, dass**
der Sollabstand zur Verschwenkung der Ausleger (3) dynamisch an den aktuellen Istwert des Mittelteils (2) von der Datenverarbeitungseinheit anpassbar ist.

3. Regelsystem nach einem der vorhergehenden Ansprüche,
**dadurch gekennzeichnet, dass**
der aktuelle Istwert des Mittelteils (2) und/oder der Ausleger (3) durch den jeweiligen von den Sensoren (5) gemessenen Abstand zum Boden gebildet ist.

4. Regelsystem nach einem der vorhergehenden Ansprüche,
**dadurch gekennzeichnet, dass**
die Sensoren (5) als Ultraschallsensoren und/oder optische Sensoren und/oder Radarsensoren ausgebildet sind.

5. Regelsystem nach einem der vorhergehenden Ansprüche,
**dadurch gekennzeichnet, dass**
der aktuelle Istwert des Mittelteils (2) über mehrere am Mittelteil (2) angeordnete Sensoren (5) erfassbar ist.

6. Regelsystem nach Anspruch 5,
**dadurch gekennzeichnet, dass**
der aktuelle Istwert des Mittelteils (2) durch eine Mittelwertbildung in der Datenverarbeitungseinheit von den mehreren Sensoren (5) am Mittelteil (2) erfassbar ist.

7. Regelsystem nach einem der vorhergehenden Ansprüche,
**dadurch gekennzeichnet, dass**
die von den Sensoren (5) der Ausleger (3) ermittelten Istwerte von der Datenverarbeitungseinheit über eine Mittelwertbildung an den Sollabstand des Mittelteils (2), insbesondere an den aktuellen Istwert des Mittelteils (2), anpassbar sind.

8. Regelsystem nach einem der vorhergehenden Ansprüche,
**dadurch gekennzeichnet, dass**
dem jeweiligen Ausleger (3) mehrere Sensoren (5) zugeordnet sind und der aktuelle Istwert des jeweiligen Auslegers (3) durch den kleinsten von den Sensoren (5) gemessenem Abstand zum Boden gebildet ist.

9. Regelsystem nach einem der vorhergehenden Ansprüche,
**dadurch gekennzeichnet, dass**
basierend auf den Messsignalen der Sensoren (5) die Höhenverstellung des Verteilergestänges (4) und/oder die Verschwenkung der Ausleger (3) von der Datenverarbeitungseinheit über die hydraulische Einrichtung einstellbar ist.

10. Regelsystem nach einem der vorhergehenden Ansprüche,
**dadurch gekennzeichnet, dass**
die hydraulische Einrichtung einen Hydraulikzylinder, insbesondere einen doppeltwirkenden Hydraulikzylinder, eine Hydraulikleitung, welche zur Zufuhr von Hydraulikflüssigkeit an den Hydraulikzylinder angeschlossen ist, und wenigstens eine hydraulische Ventileinheit zur Anpassung einer Zylinderposition umfasst, wobei die Ventileinheit über ein Stellsignal der Datenverarbeitungseinheit einstellbar ist.

11. Regelsystem nach Anspruch 10,
**dadurch gekennzeichnet, dass**
die wenigstens eine hydraulische Ventileinheit durch ein Proportionalventil gebildet ist.

12. Regelsystem nach einem der vorhergehenden Ansprüche,
**dadurch gekennzeichnet, dass**
die Datenverarbeitungseinheit mit den Sensoren (5) und der wenigstens einen hydraulischen Einrichtung eine Einheit bildet, wodurch eine direkte Verbindung zwischen den Sensoren und der Datenverarbeitungseinheit, sowie der hydraulischen Einrichtung gegeben ist.

13. Landwirtschaftliches Nutzfahrzeug (1) zum Ausbringen von Material, wie Düngemittel, Pflanzenschutzmittel oder Saatgut, mit einem Regelsystem nach einem der vorhergehenden Ansprüche.

14. Verfahren zur Regelung eines landwirtschaftlichen Nutzfahrzeuges (1) mit einem Verteilergestänge (4) zum Ausbringen von Material, wie Düngemittel, Pflanzenschutzmittel oder Saatgut, welches sich quer zur Fahrtrichtung erstreckt und ein Mittelteil (2) und zwei mit dem Mittelteil (2) durch Gelenke verbundene seitliche Ausleger (3) mit mehreren zueinander in Transportstellung einklappbaren und in Arbeitsstellung ausklappbaren, durch Gelenke verbundene Gestängeabschnitte aufweist, wobei das Mittelteil (2) zur Höhenverstellbarkeit des Verteilergestänges entlang einer vertikalen Achse bewegbar angeordnet ist und jedem Ausleger (3) wenigstens eine hydraulische Einrichtung zugeordnet ist, wodurch der jeweilige Ausleger (3) um eine horizontale Achse schwenkbar ist, und wobei dem Verteilergestänge (4) wenigstens drei Sensoren (5) zur Ermittlung des Abstandes des Mittelteils (2) und des jeweiligen Auslegers (3) zum Boden zugeordnet sind und das System eine Datenverarbeitungseinheit aufweist, welche derart konfiguriert ist, dass die Signale der Sensoren (5) als Istwerte verarbeitet werden und auf deren Basis zur Anpassung an einen Sollabstand ein Stellsignal für die hydraulische Einrichtung generiert wird, **dadurch gekennzeichnet, dass**
die Verschwenkung der Ausleger (3) basierend auf dem Sollabstand, welcher durch den aktuellen Istwert des Mittelteils (2) gebildet ist, erfolgt und die Datenverarbeitungseinheit derart konfiguriert ist, dass die gemessenen Abstände zum Boden der beiden Ausleger (3) als Istwerte in einem ersten Regelungsvorgang verarbeitet werden, wobei aus den gemessenen Werten ein Mittelwert gebildet wird, der mit dem aktuellen Istwert des Mittelteils (2) verglichen wird.

15. Verfahren nach Anspruch 14,
**dadurch gekennzeichnet, dass**
der Sollabstand zur Verschwenkung der Ausleger (3) dynamisch an den aktuellen Istwert des Mittelteils (2) von der Datenverarbeitungseinheit angepasst wird.

16. Verfahren nach Anspruch 14 oder 15,
**dadurch gekennzeichnet, dass**
der aktuelle Istwert des Mittelteils (2) über mehrere am Mittelteil (2) angeordnete Sensoren (5) erfasst wird.

17. Verfahren nach einem der Ansprüche 14 bis 16,
**dadurch gekennzeichnet, dass**
der aktuelle Istwert des Mittelteils (2) durch eine Mittelwertbildung in der Datenverarbeitungseinheit von den mehreren Sensoren (5) am Mittelteil (2) erfasst wird.

18. Verfahren nach einem der Ansprüche 14 bis 17,
**dadurch gekennzeichnet, dass**
die von den Sensoren (5) der Ausleger (3) ermittelten Istwerte von der Datenverarbeitungseinheit über eine Mittelwertbildung an den Sollabstand des Mittelteils (2), welcher durch den aktuellen Istwert des Mittelteils (2) gebildet ist, angepasst werden.

19. Verfahren nach einem der Ansprüche 14 bis 18,
**dadurch gekennzeichnet, dass**
basierend auf den Messsignalen der Sensoren (5) die Höhenverstellung des Verteilergestänges und/oder die Verschwenkung der Ausleger (3) von der Datenverarbeitungseinheit über die hydraulische Einrichtung eingestellt wird.

## Claims

1. Control system for an agricultural utility vehicle (1), comprising a distributor linkage (4) for applying material, such as fertiliser, plant protection agent or seed, which extends transversely to the direction of travel, and comprising a centre part (2) and two lateral extension arms (3) which are connected to the centre part (2) by joints and having a plurality of linkage sections connected by joints, which can be folded in relative to one another in the transport position and can be folded out in the working position, wherein the centre part (2) is arranged movably along a vertical axis for the height adjustability of the distributor linkage (4), and at least one hydraulic device is assigned to each extension arm (3), whereby the respective extension arm (3) can be pivoted about a horizontal axis, and wherein at least three sensors (5) for determining the distance between the centre part (2) and the respective extension arm (3) to the ground are assigned to the distributor linkage (4), and the system comprising a data processing unit which is configured in such a way that the signals of the sensors (5) are processed as actual values and on the basis of which an actuating signal for the hydraulic device is generated for adaptation to a target distance,
**characterised in that**
the target distance for pivoting the extension arms (3) is formed by the current actual value of the centre part (2), and the data processing unit is configured such that the measured distances to the ground of the two extension arms (3) are processed as current actual values in a first control procedure, wherein a mean value is calculated from the measured values, which is compared with the current actual value of the centre part (2).

2. Control system according to one of the preceding claims,
**characterised in that**
the target distance for pivoting the extension arms (3) can be adapted dynamically to the current actual value of the centre part (2) of the data processing unit.

3. Control system according to one of the preceding claims,
**characterised in that**
the current actual value of the centre part (2) and/or the extension arm (3) is formed by the respective distance from the ground measured by the sensors (5).

4. Control system according to one of the previous claims,
**characterised in that**
the sensors (5) are designed as ultrasonic sensors and/or optical sensors and/or radar sensors.

5. Control system according to one of the preceding claims,
**characterised in that**
the current actual value of the centre part (2) can be detected via a plurality of sensors (5) arranged on the centre part (2).

6. Control system according to claim 5,
**characterised in that**
the current actual value of the centre part (2) can be detected by the plurality of sensors (5) on the centre part (2) by averaging in the data processing unit.

7. Control system according to one of the preceding claims,
**characterised in that**
actual values determined by the sensors (5) of the extension arms (3) can be adapted by the data processing unit via averaging to the target distance of the centre part (2), in particular to the current actual value of the centre part (2).

8. Control system according to one of the preceding claims,
**characterised in that**
a plurality of sensors (5) are assigned to the respective extension arm (3) and the current actual value of the respective extension arm (3) is formed by the smallest distance to the ground measured by the sensors (5).

9. Control system according to one of the preceding claims,
**characterised in that,**
based on the measurement signals of the sensors (5), the height adjustment of the distributor linkage (4) and/or the pivoting of the extension arms (3) can be set by the data processing unit via the hydraulic device.

10. Control system according to one of the preceding claims,
**characterised in that**
the hydraulic device comprises a hydraulic cylinder, in particular a double-acting hydraulic cylinder, a hydraulic line which is connected to the hydraulic cylinder for supplying hydraulic fluid, and at least one hydraulic valve unit for adapting a cylinder position, the valve unit being adjustable via an actuating signal of the data processing unit.

11. Control system according to claim 10,
**characterised in that**
said at least one hydraulic valve unit is formed by a proportional valve.

12. Control system according to one of the preceding claims,
**characterised in that**
the data processing unit forms a unit with the sensors (5) and the at least one hydraulic device, whereby a direct connection is given between the sensors and the data processing unit, as well as the hydraulic device.

13. Agricultural utility vehicle (1) for applying material, such as fertilisers, plant protection products or seed, comprising a control system according to one of the preceding claims.

14. Method for controlling an agricultural utility vehicle (1) comprising a distributor linkage (4) for applying material, such as fertilisers, plant protection agents or seed, which extends transversely to the direction of travel, and comprising a centre part (2) and two lateral extension arms (3) which are connected to the centre part (2) by joints and having a plurality of linkage sections connected by joints which can be folded in relative to one another in the transport position and can be folded out in the working position, wherein the centre part (2) is arranged movably along a vertical axis for the height adjustability of the distributor linkage (4), and at least one hydraulic device is assigned to each extension arm (3), whereby the respective extension arm (3) can be pivoted about a horizontal axis, and wherein at least three sensors (5) for determining the distance between the centre part (2) and the respective extension arm (3) to the ground are assigned to the distributor linkage (4), and the system comprising a data processing unit which is configured in such a way that the signals of the sensors (5) are processed as actual values and on the basis of which an actuating signal for the hydraulic device is generated for adaptation to a target distance,
**characterised in that**
the pivoting of the extension arms (3) is based on the target distance which is formed by the current actual value of the centre part (2) and the data processing unit is configured such that the measured distances to the ground of the two extension arms (3) are processed as current actual values in a first control procedure, wherein a mean value is calculated from the measured values, which is compared with the current actual value of the centre part (2).

15. Method according to claim 14,
**characterised in that**
the target distance for pivoting the extension arms (3) is dynamically adapted to the current actual value of the centre part (2) by the data processing unit.

16. Method according to claim 14 or 15,
**characterised in that**
the current actual value of the centre part (2) is detected via a plurality of sensors (5) arranged on the centre part (2).

17. Method according to one of claims 14 to 16,
**characterised in that**
the current actual value of the centre part (2) is detected by the plurality of sensors (5) on the centre part (2) by averaging in the data processing unit.

18. Method according to one of claims 14 to 17,
**characterised in that**
the actual values determined by the sensors (5) of the extension arms (3) are adapted by the data processing unit via averaging to the desired distance of the centre part (2), which is formed by the current actual value of the centre part (2), by means of the data processing unit.

19. Method according to one of claims 14 to 18,
**characterised in that,**
based on the measurement signals of the sensors (5), the height adjustment of the distributor linkage and/or the pivoting of the extension arms (3) is set by the data processing unit via the hydraulic device.

## Revendications

1. Système de régulation pour un véhicule utilitaire agricole (1) avec une rampe de distribution (4) pour l'épandage de matières, tels que des engrais, des produits phytosanitaires ou des semences, qui s'étend transversalement au sens de la marche et qui comprend une partie centrale (2) et deux bras latéraux (3) reliés à la partie centrale (2) par des articulations, avec plusieurs tronçons de rampe pouvant être repliés les uns vers les autres en position de transport et déployés en position de travail, la partie centrale (2) étant disposée de manière mobile le long d'un axe vertical pour permettre le réglage en hauteur de la rampe de distribution (4) et au moins un dispositif hydraulique étant associé à chaque bras (3), de sorte que le bras respectif (3) peut pivoter autour d'un axe horizontal, et dans lequel au moins trois capteurs (5) sont associés à la rampe de distribution (4) pour déterminer la distance de la partie centrale (2) et du bras respectif (3) par rapport au sol, et le système comporte une unité de traitement de données, qui est configurée de telle sorte que les signaux des capteurs (5) sont traités en tant que valeurs réelles actuelle et qu'un signal de réglage pour le dispositif hydraulique est généré sur la base de ces signaux pour l'adaptation à une distance de consigne, **caractérisé en ce que**
la distance de consigne pour le pivotement des bras (3) est formée par la valeur réelle actuelle de la partie centrale (2) et l'unité de traitement de données est configurée de telle sorte que les distances mesurées des deux bras (3)par rapport au sol sont traitées en tant que valeurs réelles dans un premier processus de régulation, une valeur moyenne étant établie à partir des valeurs mesurées, laquelle est comparée à la valeur réelle actuelle de la partie centrale (2).

2. Système de régulation selon l'une des revendications précédentes,
**caractérisé en ce que**
la distance de consigne pour le pivotement des bras (3) peut être adaptée de manière dynamique à la valeur réelle actuelle de la partie centrale (2) par l'unité de traitement de données.

3. Système de régulation selon l'une des revendications précédentes,
**caractérisé en ce que**
la valeur réelle actuelle de la partie centrale (2) et/ou des bras (3) est établie par la distance respective par rapport au sol mesurée par les capteurs (5).

4. Système de régulation selon l'une des revendications précédentes,
**caractérisé en ce que**
les capteurs (5) sont conçus comme des capteurs à ultrasons et/ou des capteurs optiques et/ou des capteurs radar.

5. Système de régulation selon l'une quelconque des revendications précédentes,
**caractérisé en ce que**
la valeur réelle actuelle de la partie centrale (2) peut être détectée par plusieurs capteurs (5) disposés sur la partie centrale (2).

6. Système de régulation selon la revendication 5,
**caractérisé en ce que**
la valeur réelle actuelle de la partie centrale (2) peut être détectée par un établissement d'une valeur moyenne dans l'unité de traitement de données par les plusieurs capteurs (5) sur la partie centrale (2).

7. Système de régulation selon l'une quelconque des revendications précédentes,
**caractérisé en ce que**
les valeurs réelles déterminées par les capteurs (5) des bras (3) peuvent être adaptées par l'unité de traitement de données à la distance de consigne de la partie centrale (2), en particulier à la valeur réelle actuelle de la partie centrale (2), par l'intermédiaire d'un établissement d'une valeur moyenne.

8. Système de régulation selon l'une quelconque des revendications précédentes,
**caractérisé en ce que**
plusieurs capteurs (5) sont associés au bras (3) respectif et la valeur réelle actuelle du bras (3) respectif est formée par la plus petite distance au sol mesurée par les capteurs (5).

9. Système de régulation selon l'une quelconque des revendications précédentes,
**caractérisé en ce que**
sur la base des signaux de mesure des capteurs (5), le réglage en hauteur de la rampe de distribution (4) et/ou le pivotement des bras (3) peut être réglé par l'unité de traitement de données via le dispositif hydraulique.

10. Système de régulation selon l'une quelconque des revendications précédentes,
**caractérisé en ce que**
le dispositif hydraulique comprend un vérin hydraulique, en particulier un vérin hydraulique à double effet, une conduite hydraulique qui est raccordée au vérin hydraulique pour l'alimentation en liquide hydraulique, et au moins une unité de soupape hydraulique pour l'adaptation d'une position de vérin, l'unité de soupape pouvant être réglée par un signal de réglage de l'unité de traitement de données.

11. Système de régulation selon la revendication 10, **caractérisé en ce que**
ladite au moins une unité de soupape hydraulique est formée par une soupape proportionnelle.

12. Système de régulation selon l'une quelconque des revendications précédentes,
**caractérisé en ce que**
l'unité de traitement de données forme une unité avec les capteurs (5) et le au moins un dispositif hydraulique, ce qui permet une liaison directe entre les capteurs et l'unité de traitement de données, ainsi que le dispositif hydraulique.

13. Véhicule agricole utilitaire (1) pour l'épandage de matières, telles que des engrais, des produits phytosanitaires ou des semences, avec un système de régulation selon l'une des revendications précédentes.

14. Procédé de régulation d'un véhicule utilitaire agricole (1) avec une rampe de distribution (4) pour l'épandage de matières, tels que des engrais, des produits phytosanitaires ou des semences, qui s'étend transversalement à la direction de déplacement et qui comprend une partie centrale (2) et deux bras latéraux (3) reliés à la partie centrale (2) par des articulations avec plusieurs bras pouvant être repliés les uns par rapport aux autres en position de transport et pouvant être déployés en position de travail, la partie centrale (2) étant disposée de manière mobile le long d'un axe vertical pour permettre le réglage en hauteur de la rampe de distribution et au moins un dispositif hydraulique étant associé à chaque bras (3), de sorte que le bras respectif (3) peut pivoter autour d'un axe horizontal, et dans lequel au moins trois capteurs (5) sont associés à la rampe de distribution (4) pour déterminer la distance de la partie centrale (2) et du bras respectif (3) par rapport au sol, et le système comporte une unité de traitement de données qui est configurée de telle sorte que les signaux des capteurs (5) sont traités en tant que valeurs réelles et qu'un signal de réglage pour le dispositif hydraulique est généré sur la base de ces signaux pour l'adaptation à une distance de consigne, **caractérisé en ce que**
le pivotement des bras (3) s'effectue sur la base de la distance de consigne, qui est établie par la valeur réelle actuelle de la partie centrale (2), et l'unité de traitement de données est configurée de telle sorte que les distances mesurées par rapport au sol des deux bras (3) sont traitées en tant que valeurs réelles dans un premier processus de régulation, une valeur moyenne étant établie à partir des valeurs mesurées, laquelle est comparée à la valeur réelle actuelle de la partie centrale (2).

15. Procédé selon la revendication 14,
**caractérisé en ce que**
la distance de consigne pour le pivotement des bras (3) est adaptée de manière dynamique à la valeur réelle actuelle de la partie centrale (2) par l'unité de traitement de données.

16. Procédé selon la revendication 14 ou 15,
**caractérisé en ce que**
la valeur réelle actuelle de la partie centrale (2) est saisie par plusieurs capteurs (5) disposés sur la partie centrale (2).

17. Procédé selon l'une quelconque des revendications 14 à 16,
**caractérisé en ce que**
la valeur réelle actuelle de la partie centrale (2) est saisie par un établissement d'une valeur moyenne dans l'unité de traitement de données par les plusieurs capteurs (5) sur la partie centrale (2).

18. Procédé selon l'une quelconque des revendications 14 à 17,
**caractérisé en ce que**
les valeurs réelles déterminées par les capteurs (5) des bras (3) sont adaptées par l'unité de traitement de données à la distance de consigne de la partie centrale (2), qui est établie par la valeur réelle actuelle de la partie centrale (2), par l'intermédiaire d'un établissement de valeur moyenne.

19. Procédé selon l'une quelconque des revendications 14 à 18,
**caractérisé en ce que**
sur la base des signaux de mesure des capteurs (5), le réglage en hauteur de la rampe de distribution et/ou le pivotement des bras (3) est réglé par l'unité de traitement de données via le dispositif hydraulique.
